# EUROPEAN PATENT APPLICATION

(11) **EP 2 485 044 A1**
(43) Date of publication of application: **08.08.2012**
(21) Application number: 12154118.9
(22) Date of filing: 06.02.2012
(51) Int. Cl.: G01N 27/327

(54) **Electrochemical-based analytical test strip with graded enzymatic reagent layer and related methods**

(30) Priority: 07.02.2011 US 201113021994
(71) Applicant: Lifescan Scotland Limited, Inverness IV2 3ED (GB)
(72) Inventor: Alvarez-Icaza, Manuel, Inverness, IV2 4FL (GB); McNeilage, Alan, Inverness, IV3 8LZ (GB); Liu, Zuifang, Inverness, IV2 6GT (GB); Baskeyfield, Damian, Auldearn, IV12 5TH (GB)
(74) Representative: Carpmaels & Ransford

(57) **Abstract**

An electrochemical-based analytical test strip for the determination of an analyte (such as glucose) in a bodily fluid sample (e.g., a whole blood sample) includes an electrically-insulating substrate, at least one working electrode disposed on the electrically-insulating substrate and a graded enzymatic reagent layer disposed on the at least one working electrode. The graded enzymatic reagent layer includes an upper reaction grade that contains an enzyme. The graded enzymatic layer also has a lower spacer grade devoid of the enzyme, the lower spacer grade disposed between the upper reaction grade and the working electrode such that the upper reaction grade is spaced equidistant from the working electrode by the lower spacer grade by a predetermined distance during use of the electrochemical-based analytical test strip. In addition, the upper reaction grade is configured and constituted such that an enzymatic reaction between the enzyme and a bodily fluid sample applied to the electrochemical-based analytical test strip is localized in the upper reaction grade and the lower spacer grade has predetermined mass transport characteristics for a component of the enzymatic reaction that cause mass transport of the component through the lower spacer grade to the working electrode to be slower than mass transport of the analyte through the bodily fluid sample to the upper reaction grade. A method for determining an analyte (such as glucose) in a bodily fluid sample (for example, a whole blood sample) includes applying a bodily fluid sample to such an electrochemical-based analytical test strip.

## Description

### BACKGROUND OF THE INVENTION

Field of the Invention

The present invention relates, in general, to medical devices and, in particular, to analytical test strips and related methods.

Description of Related Art

The determination (e.g., detection and/or concentration measurement) of an analyte in a fluid sample is of particular interest in the medical field. For example, it can be desirable to determine glucose, ketone bodies, cholesterol, lipoproteins, triglycerides, acetaminophen and/or HbA1c concentrations in a sample of a bodily fluid such as urine, blood, plasma or interstitial fluid. Such determinations can be achieved using electrochemical-based analytical test strips along with an associated test meter.

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings, in which like numerals indicate like elements, of which:
FIG. 1 is a simplified, exploded, perspective view of an electrochemical-based analytical test strip for the determination of an analyte in a bodily fluid sample according to an embodiment of the present invention;
FIG. 2 is a simplified cross-sectional depiction of a portion of a graded enzymatic reagent layer and a portion of a working electrode of the electrochemical-based analytical test strip of FIG. 1;
FIG. 3 is a simplified cross-sectional and notated depiction (not necessarily to scale) of a portion of the graded enzymatic reagent layer and working electrode of the electrochemical-based analytical test strip of FIG. 1 and an enzymatic reaction that occurs during use thereof;
FIG. 4 is a graph of Hct versus simulated electrochemical response current for electrochemical-based analytical test strips with uniform (i.e., non-graded) enzymatic reagent layers of various relative diffusion coefficients;
FIG. 5 is a graph of time versus electrochemical response current for an electrochemical-based analytical test strip according to an embodiment of the present invention;
FIG. 6 is a graph of YSI-based glucose concentration versus glucose concentration determined using an electrochemical-based analytical test strip according to an embodiment of the present invention;
FIG. 7 is a graph of glucose determination bias versus Hct for an electrochemical-based analytical test strip according to an embodiment of the present invention; and
FIG. 8 is a flow diagram depicting stages in a method for determining an analyte in a bodily fluid sample according to an embodiment of the present invention.

### DETAILED DESCRIPTION OF ILLUSTRATIVE EMBODIMENTS

The following detailed description should be read with reference to the drawings, in which like elements in different drawings are identically numbered. The drawings, which are not necessarily to scale, depict exemplary embodiments for the purpose of explanation only and are not intended to limit the scope of the invention. The detailed description illustrates by way of example, not by way of limitation, the principles of the invention. This description will clearly enable one skilled in the art to make and use the invention, and describes several embodiments, adaptations, variations, alternatives and uses of the invention, including what is presently believed to be the best mode of carrying out the invention.

As used herein, the terms "about" or "approximately" for any numerical values or ranges indicate a suitable dimensional tolerance that allows the part or collection of components to function for its intended purpose as described herein.

In general, electrochemical-based analytical test strips for the determination of an analyte (such as glucose) in a bodily fluid sample (e.g., a whole blood sample) according to embodiments of the present invention include an electrically-insulating substrate, at least one working electrode disposed on the electrically-insulating substrate and a graded enzymatic reagent layer disposed on the at least one working electrode. The graded enzymatic reagent layer includes an upper reaction grade that has an upper surface and contains an enzyme. The graded enzymatic layer also has a lower spacer grade devoid of the enzyme, with the lower spacer grade being disposed between the upper reaction grade and the working electrode such that the upper reaction grade is spaced equidistant by a predetermined distance from the working electrode by the lower spacer grade during use of the electrochemical-based analytical test strip. In addition, the upper reaction grade is configured and constituted such that an enzymatic reaction between the enzyme and an analyte in a bodily fluid sample applied to the electrochemical-based analyte test strip is localized in the upper reaction grade. Moreover, the lower spacer grade has predetermined mass transport characteristics for a component of the enzymatic reaction that cause mass transport of the component through the lower spacer grade to the working electrode to be slower than mass transport of the analyte through the bodily fluid sample to the upper reaction grade during use of the electrochemical-based analytical test strip. It should be noted that the term "graded" as used herein refers to an enzymatic reagent layer that is arranged in a series of grades such as the aforementioned upper reaction grade and lower spacer grade. Such "grades" can, depending on particulars of an embodiment, be considered sub-layers of the enzymatic reagent layer.

Electrochemical-based analytical test strips according to the present invention are particularly beneficial in terms of accuracy and insensitivity to variations in the bodily fluid sample (e.g., variations in Hematocrit [Hct] of a whole blood sample) since their electrochemical response (for example, a current) is predominantly the result of (i) an enzymatic reaction that is localized a predetermined equidistance from the working electrode in the graded enzymatic reaction layer and (ii) the lower spacer layer's predetermined mass transport characteristics. In this regard, the term "localized" refers to an enzymatic reaction that takes place predominantly, or for the majority, within the upper reaction grade. As described elsewhere herein, such localization serves to beneficially improve insensitivity to variations in the bodily fluid sample.

Electrochemical-based analytical test strips according to the present invention are also beneficial in that variation in electrochemical response resulting from the enzymatic reaction between the enzyme and an analyte of the bodily fluid sample occurring detrimentally close and/or adjacent to the working electrode is precluded by the lower spacer grade. In addition, the predetermined distance between the upper reaction grade and the working electrode that is provided by the lower spacer grade is beneficial in that the lower spacer grade can have predetermined mass transport characteristics (that are independent of the mass transport characteristics of the upper reaction grade) that further enhance the electrochemical-based analytical test strips accuracy. For example, it has been determined that conventional enzymatic reagent layers can have significant porosity and that such porosity is a mass transport characteristic that increases their sensitivity to variations in Hct. However, in electrochemical-based analytical test strips according to embodiments of the present invention, the lower spacer grade can, if desired, be configured to be devoid of pores (i.e., have an operable porosity of zero percent) and thereby provide a beneficially reduced sensitivity to Hct variation. Moreover, electrochemical-based analytical test strips according to embodiments of the present invention can be manufactured using suitable conventional techniques.

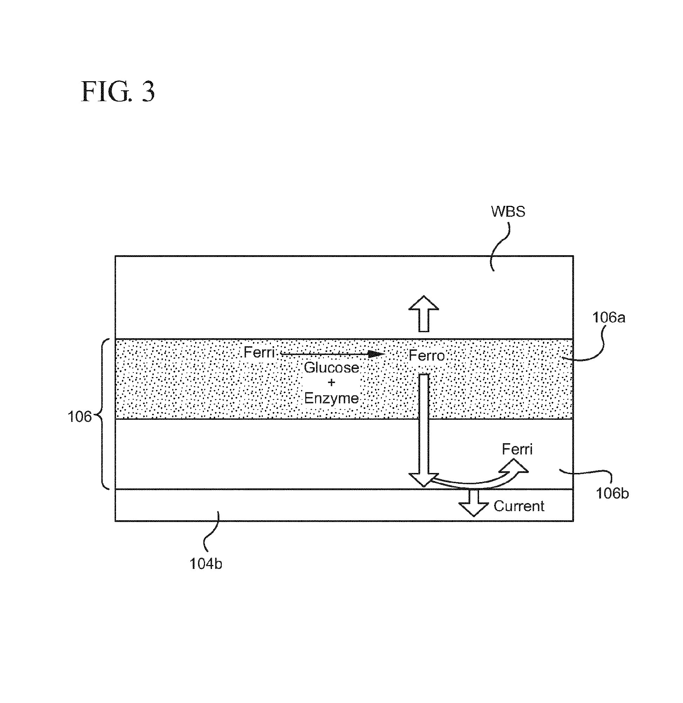

In electrochemical-based analytical test strips according to embodiments of the present invention, it is hypothesized without being bound that an enzymatic reaction mediator (such as a reduced mediator) produced within the upper reaction grade partitions into (i) mediator that escapes to the bodily fluid sample/bulk solution and (ii) mediator that travels through the graded enzymatic reagent layer to a working electrode and produces an electrochemical response (see also FIG. 3 described elsewhere herein). This partition results in a particularly beneficial self-compensation mechanism when the bodily fluid sample is a whole blood sample. For whole blood samples, as hematocrit decreases, the enzymatic reaction rate increases due to increased analyte diffusion from the whole blood sample into the upper reaction grade. At the same time, the partitioning of the produced mediator into the whole blood sample/bulk solution will increase due to increased mediator diffusion in the whole blood sample of decreased hematocrit whilst the partitioning of the produced mediator through the lower spacer grade is depressed by its low diffusion characteristics. Conversely, any increase in hematocrit of the whole blood samples leads to an increase in the partitioning of the produced mediator through the lower spacer grade to the working electrode due to decreased mediator diffusion in the whole blood sample of increased hematocrit. In other words, when the diffusion of a mediator in a whole blood sample is relatively fast due to low Hct, the partition is such that relatively less mediator travels to the working electrode but when the diffusion of mediator in the whole blood sample is relatively slow, the partition is such that a larger proportion of the mediator travels to the working electrode. As a result of this self-compensating mechanism, electrochemical-based analytical test strips according to embodiments of present invention have a beneficially low sensitivity to hematocrit when determining glucose in whole blood samples.

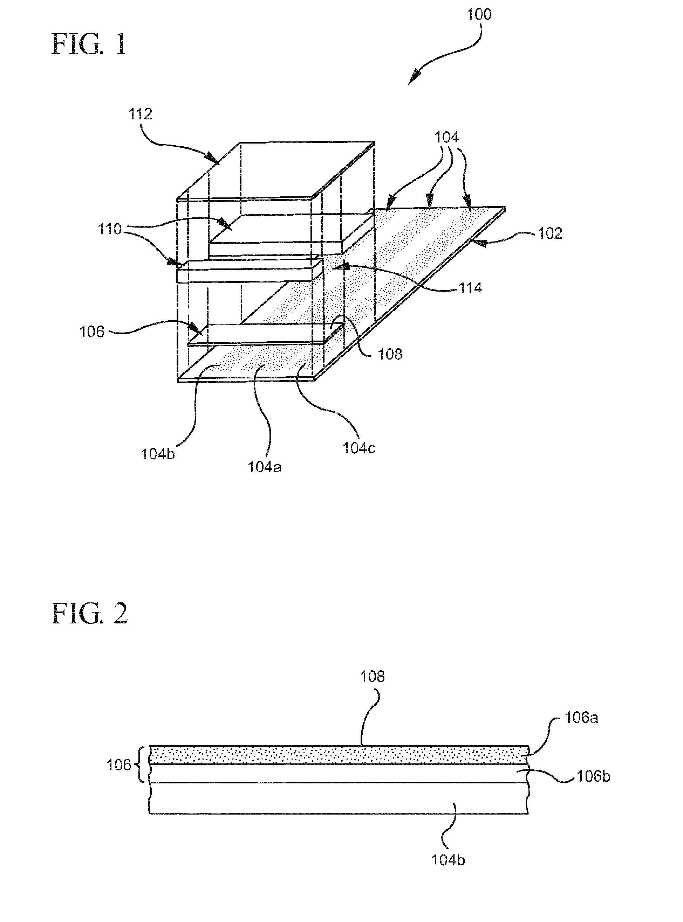

Referring to FiGs. 1 and 2, electrochem ical-based analytical test strip 100 includes an electrically-insulating substrate 102, a patterned conductor layer 104, a graded enzymatic reagent layer 106 (with upper surface 108), a patterned spacer layer 110, and a top film 112. Electrochemical-based analytical test strip 100 also includes a sample-receiving chamber 114 formed therein with patterned spacer layer 110 defining outer walls of sample-receiving chamber 114.

Patterned conductor layer 104 includes three electrodes, a counter electrode 104a (also referred to as a reference electrode), a first working electrode 104b and a second working electrode 104c.

During use of electrochem ical-based analytical test strip 100 to determine an analyte in a bodily fluid sample (e.g., blood glucose concentration in a whole blood sample), electrodes 104a, 104b and 104c are employed by an associated meter (not shown) to monitor an electrochemical response of the electrochemical-based analytical test strip. The electrochemical response can be, for example, an electrochemical reaction induced current of interest. The magnitude of such a current can then be correlated with the amount of analyte present in the bodily fluid sample under investigation. During such use, a bodily fluid sample is applied to electrochemical-based analytical test strip100 and, thereby, received in sample-receiving chamber 114.

Graded enzymatic reagent layer 106 is disposed on patterned conductor layer 104 and, in particular, on first working electrode 104b and second working electrode 104c. In addition, graded enzymatic reagent layer 106 includes an upper reaction grade 106a that contains at least an enzyme and a lower spacer grade 106b that is devoid of the enzyme (see FIG. 2). Lower spacer grade 106b is disposed between upper reaction grade 106a and the patterned conductor layer 104 such that upper reaction grade 106a is spaced equidistant from the first working electrode 104b and second working electrode 104c by lower spacer grade 106b. The equidistant spacing creates a predetermined distance between the working electrode(s) and the upper reaction grade during use of electrochemical-based analytical test strips according to embodiments of the present invention. The lower spacer grade has predetermined mass transport characteristics (such as predetermined diffusion coefficient, predetermined mass transport speed, and/or predetermined lack of porosity) for a component of the enzymatic reaction that cause mass transport of the component through the lower spacer grade to the electrode to be slower than mass transport of the analyte through the bodily fluid sample to the upper reaction grade during use of the electrochemical-based analytical test strip. The predetermined distance and predetermined mass transport characteristics can be related in that mass transport through the lower spacer grade is a function of (i) the thickness of the lower spacer grade and (ii) a molecule's diffusion coefficient in the lower spacer grade. In this regard, for a given difference of concentration and in a statistical sense the "speed of mass transport" of a molecular entity (such as a reduced mediator) through the lower spacer grade can be considered to be the ratio of the molecule's diffusion coefficient divided by the lower spacer grade thickness. Reducing sensitivity to bodily fluid sample variation (e.g., whole blood sample Hct variation) can be accomplished by electrochemical-based analytical test strip configurations wherein the predetermined distance and/or the predetermined mass transfer characteristics of the lower spacer grade provide a speed of mass transport that is low enough to reduce any deleterious dependency of the electrochemical-based analytical test strip's electrochemical response on bodily fluid sample variations while still providing an operable electrochemical response (such as an operable response magnitude).

Upper reaction grade 106a is configured and constituted such that the majority of an enzymatic reaction between the enzyme and a bodily fluid sample applied to the electrochemical-based analytical test strip is localized in the graded enzymatic reaction layer. In addition, upper reaction grade 106a is configured and constituted to be operably insoluble in the bodily fluid sample or only partially soluble in the bodily fluid sample during the duration of analyte determination. Such insolubility or partial solubility serves to localize the enzymatic reaction and reduce deleterious effects of variation in bodily fluid sample characteristics such as Hct.

For embodiments of the present invention wherein the analyte is glucose and the bodily fluid sample is a whole blood sample, the lower spacer grade can have, for example, a wet thickness during use in the range of 1 micron to 3 microns and a diffusion coefficient for a mediator component of the enzymatic reagent composition (e.g., ferrocyanide) in the range of 6.5x10⁻⁸ cm²/sec to 2x10⁻⁷ cm²/sec. In such an embodiment, the upper reaction grade can have, for example, a wet thickness during use in the range of 6 microns to 10 microns and a mediator diffusion coefficient of approximately 2x10⁻⁶cm²/sec. Once apprised of the present disclosure, one skilled in the art will recognize that the term "wet" refers to a layer that has been wetted by exposure to a bodily fluid sample during use of an electrochemical-based analytical test strip according to embodiments of the present invention.

Once apprised of the present disclosure, one skilled in the art will also recognize that electrochemical-based analytical test strips according to the present invention can take any suitable configuration including, for example, configurations wherein the working and counter/reference electrodes are in a co-planar configuration (as depicted in FIG. 1) or an opposing configuration. Moreover, the configuration can be such that the sample-receiving chamber of the electrochemical-based analytical test strip is designed for side-fill (as in FIG. 1) or end-fill. Furthermore, although electrochemical-based analytical test strip 100 is depicted as including three co-planar electrodes, embodiments of electrochemical-based analytical test strips according to the present invention can include any suitable number of electrodes.

Electrically-insulating substrate 102 can be any suitable electrically-insulating substrate known to one skilled in the art including, for example, a nylon substrate, polycarbonate substrate, a polyimide substrate, a polyvinyl chloride substrate, a polyethylene substrate, a polypropylene substrate, a glycolated polyester (PETG) substrate, a polystyrene substrate, a silicon substrate, ceramic substrate, glass substrate or a polyester substrate (e.g., a 7 mil thick polyester substrate). The electrically-insulating substrate can have any suitable dimensions including, for example, a width dimension of about 5 mm, a length dimension of about 27 mm and a thickness dimension of about 0.5 mm.

Patterned conductor layer 104 can be formed of any suitable electrically conductive material such as, for example, gold, palladium, carbon, silver, platinum, tin oxide, iridium, indium, or combinations thereof (e.g., indium doped tin oxide). Moreover, any suitable technique or combination of techniques can be employed to form patterned conductive layer 104 including, for example, sputtering, evaporation, electro-less plating, screen-printing, contact printing, laser ablation or gravure printing. A typical but non-limiting thickness for the patterned conductor layer is in the range of 5nm to 100nm.

One skilled in the art will recognize that conventional electrochemical-based analyte test strips employ a working electrode along with an associated counter/reference electrode and enzymatic reagent layer to facilitate an electrochemical reaction with an analyte of interest and, thereby, determine the presence and/or concentration of that analyte. For example, an electrochemical-based analyte test strip for the determination of glucose concentration in a blood sample can employ an enzymatic reagent that includes the enzyme glucose oxidase and the mediator ferricyanide (which is reduced to the mediator ferrocyanide during the electrochemical reaction). Such conventional analyte test strips and enzymatic reagent layers are described in, for example, U.S. Patents 5,708,247; 5,951,836; 6,241,862; and 6,284,125; each of which is hereby incorporated in full by reference. In this regard, the graded enzymatic reagent layer employed in embodiments of the present invention can include any suitable sample-soluble enzymatic reagents, with the selection of enzymatic reagents being dependent on the analyte to be determined and the bodily fluid sample. For example, if glucose is to be determined in a blood sample, graded enzymatic reagent layer 106 can include glucose oxidase or glucose dehydrogenase along with other components necessary for functional operation.

In general, graded enzymatic reagent layer 106 includes at least an enzyme and a mediator with the lower spacer grade being devoid of the enzyme. Examples of suitable mediators include, for example, ferricyanide, ferrocene, ferrocene derivatives, osmium bipyridyl complexes, and quinone derivatives. Examples of suitable enzymes include glucose oxidase, glucose dehydrogenase (GDH) using a pyrroloquinoline quinone (PQQ) co-factor, GDH using a nicotinamide adenine dinucleotide (NAD) co-factor, and GDH using a flavin adenine dinucleotide (FAD) co-factor. Graded enzymatic reagent layer 106 can be applied during manufacturing using any suitable technique including, for example, screen printing.

It can be particularly beneficial in terms of simplicity of manufacturing and the provision of enzymatic reaction components to the upper reaction layer to have the lower spacer grade constituted from a sub-set of the components of the enzyme reagent composition in the graded enzymatic reagent layer. For example, the lower spacer grade can include suitable additive components (e.g., thickeners and fillers) of the enzyme reagent composition (such as HEC and/or Silica) or additive components and the oxidized mediator (e.g., ferricyanide) of the enzyme reagent composition while still localizing the enzyme component of the enzyme reagent composition in the upper reaction grade.

Once apprised of the present disclosure, one skilled in the art will recognize that graded enzymatic reagent layer 106 can, if desired, also contain suitable buffers (such as, for example, Tris HCl, Citraconate, Citrate and Phosphate), hydroxyethylcelulose [HEC], carboxymethylcellulose, ethycellulose and alginate, enzyme stabilizers and other additives as are known in the field.

Further details regarding the use of electrodes and enzymatic reagent layers for the determination of the concentrations of analytes in a bodily fluid sample, albeit not in the form of the graded enzymatic reagent layer described herein, are in U.S. Patent No. 6,733,655, which is hereby fully incorporated by reference.

Patterned spacer layer 110 can be formed of any suitable material including, for example, a 95um thick, double-sided pressure sensitive adhesive layer, a heat activated adhesive layer, or a thermo-setting adhesive plastic layer. Patterned spacer layer 110 can have, for example, a thickness in the range of from about 1 micron to about 500 microns, preferably between about 10 microns and about 400 microns, and more preferably between about 40 microns and about 200 microns.

Electrochemical-based analytical test strip 100 can be manufactured, for example, by the sequential aligned formation of patterned conductor layer 104, graded enzymatic reagent layer 106, patterned spacer layer 110, and top film 112 onto electrically-insulating substrate 102. Any suitable techniques known to one skilled in the art can be used to accomplish such sequential aligned formation, including, for example, screen printing, photolithography, photogravure, chemical vapour deposition, sputtering, tape lamination techniques and combinations thereof.

FIG. 3 is a simplified cross-sectional and notated depiction (not to scale) of upper reaction grade 106a, lower spacer layer 106b and first working electrode 1 04b of electrochem ical-based analytical test strip 100 for the circumstance where the analyte is glucose in a whole blood sample (WBS) and the enzymatic reaction includes the conversion of the mediator ferricyanide ("Ferri" in FIG. 3) to ferrocyanide ("Ferro" in FIG. 3). FIG. 3 serves to illustrate various concepts and features of electrochemical-based analytical test strips according to embodiments of the present invention and described herein. For example, FIG. 3 depicts the localization of an enzymatic reaction in the upper reaction grade (i.e., an enzymatic reaction between the analyte glucose and an enzyme that converts ferricyanide to ferrocyanide) and the partition of the produced ferrocyanide between ferrocyanide that travels into the whole blood sample (represented by the upward pointing arrow in the WBS of FIG. 3) and ferrocyanide that travels to the electrode (represented by the downward pointing arrow that traverses both upper reagent grade 106a and lower spacer grade 106b in FIG. 3) and produces an electrochemical response current.

Numerical Simulations and Related Experimental Studies

Knowledge gained from a numerical simulation of partial differential equations describing the enzymatic reaction process of a glucose electrochemical-based analytical test strip resulted in the unexpected hypothesis that mediator mass transport effects during the enzymatic reaction are a critical factor in Hct sensitivity in electrochem ical-based analytical test strips..

However, in electrochemical-based analytical test strips according to the present invention, the relevant enzymatic reaction is predominantly localized in the upper reaction grade, thus eliminating mediator movement through the bodily fluid sample and/or bulk solution as a primary factor in electrochemical response. Moreover, since the lower spacer grade of electrochemical-based analytical test strips according to the present invention has predetermined mass transport characteristics (e.g., diffusion coefficients and mass transport speed) for a component of the enzymatic reaction that cause mass transport of the component through the lower spacer grade to the working electrode to be slower than mass transport of the analyte through the bodily fluid sample to the upper reaction grade during use of the electrochemical-based analytical test strip, variations in analyte mass transport are also not a primary factor in electrochemical response.

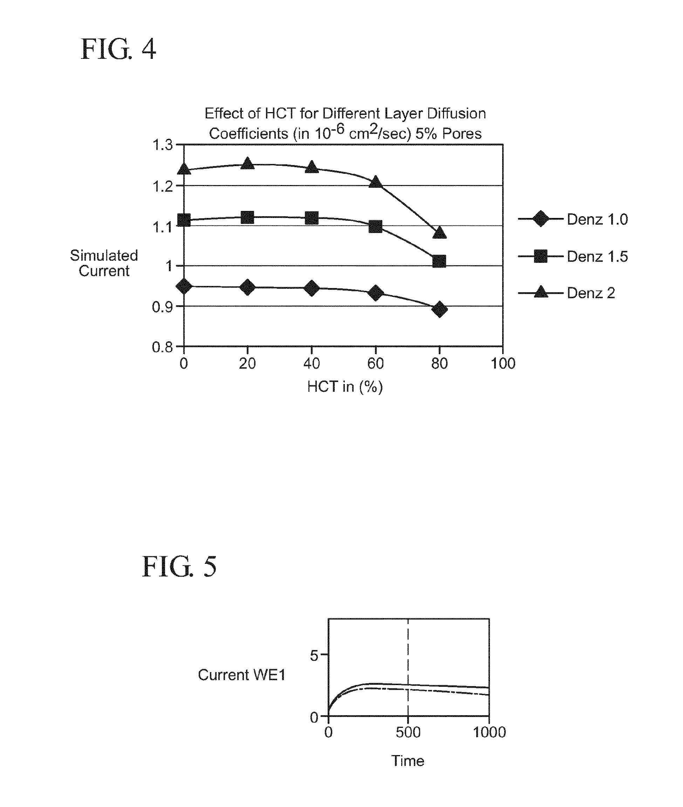

FIG. 4 is a graph of Hct versus simulated electrochemical response current for uniform (non-graded) enzymatic reagent layers of various relative mediator diffusion coefficients (Denz) and with a 5% porosity. FIG. 4 illustrates that the electrochemical response becomes increasingly more constant across the plotted Hct range as the relative diffusion coefficient is decreased. This simulated result supports the hypothesis that mediator mass transport can play an important role in Hct-induced electrochemical response variation. Additional simulated responses indicated that increasing porosity is a factor in increased Hct sensitivity and that pore-free layers (i.e., layers that are devoid of pores with diameters in the operable range of 2 microns to 100 microns or greater) are beneficial in decreasing Hct sensitivity. However, it can be difficult to manufacture a conventional enzymatic reagent layer that is devoid of pores. Therefore, electrochemical-based analytical test strips according to embodiments of the present invention can include a lower spacer layer that is devoid of pores (thus providing the benefits described herein) combined with an upper reaction layer that has a porosity that would otherwise be detrimental.

FIG. 5 is a graph of time versus electrochemical response current for an electrochemical-based analytical test strip according to the present invention with a graded enzymatic reagent layer that included a lower spacer layer formed of hydroxyethyl cellulose (HEC) and silica and an upper reaction grade that included a complete enzymatic reagent composition that includes HEC and silica. The two lines of FIG. 5 represent a blood plasma sample (solid line) and a 40% whole blood sample (dashed line) with the time axis being in 100ths of a second. FIG. 5 demonstrates that at a time of 5 seconds, the difference between whole blood and blood plasma is beneficially and unexpectedly small.

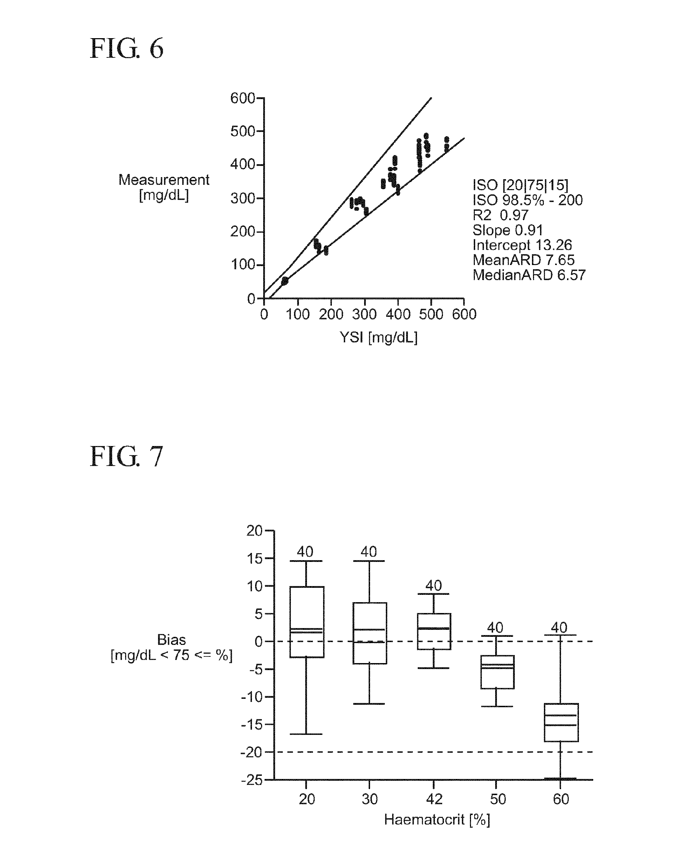

FIG. 6 is a graph of YSI determined glucose concentration versus glucose concentration in whole blood samples with Hct in the range of 20% to 60% determined using electrochemical-based analytical test strips according to an embodiment of the present invention with a graded enzymatic reagent layer that included a lower spacer layer formed of HEC and silica and an upper reaction grade that included a complete enzymatic reagent composition. FIG. 7 is a graph of glucose determination bias versus Hct for the electrochemical-based analytical test strips of FIG. 6. The data of FIGs. 6 and 7 demonstrate a beneficially strong correlation between the electrochemical-based analytical test strips with a grade enzymatic reagent layer and conventional YSI-based determinations.

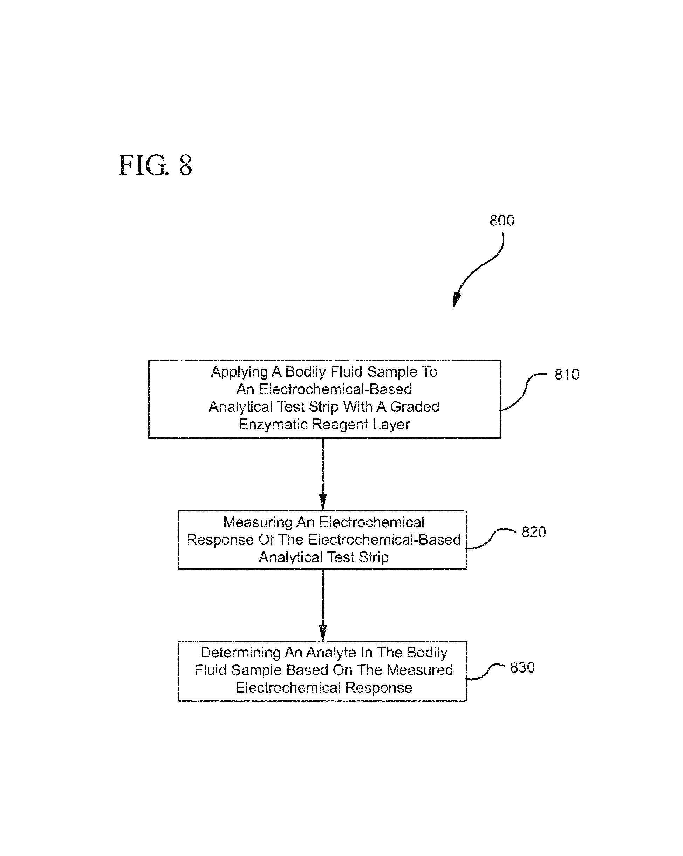

FIG. 8 is a flow diagram depicting stages in a method 800 for determining an analyte (such as glucose) in a bodily fluid sample (e.g., a whole blood sample) according to an embodiment of the present invention. At step 810 of method 800, a bodily fluid sample is applied to an electrochemical-based analytical test strip. The electrochemical-based analytical test strip to which the sample is applied has a working electrode disposed on an electrically-insulating substrate and a graded enzymatic reagent layer disposed on the working electrode.

The graded enzymatic reagent layer of method 800 includes (i) an upper reaction grade containing an enzyme and having an upper surface and (ii) a lower spacer grade devoid of the enzyme. The lower spacer grade is disposed between the upper reaction grade and the working electrode such that the upper reaction grade is spaced equidistant from the working electrode by the lower spacer grade by a predetermined distance during use of the electrochemical-based analytical test strip. In addition, the upper reaction grade is configured and constituted such that an enzymatic reaction between the enzyme and a bodily fluid sample applied to the electrochemical-based analyte test strip is localized near the upper surface of the upper reaction grade.

Method 800 also includes measuring an electrochemical response of the electrochemical-based analytical test strip (see step 820 of FIG. 8) and determining the analyte based on the measured electrochemical response (at step 830 of method 800).

Once apprised of the present disclosure, one skilled in the art will recognize that method 800 can be readily modified to incorporate any of the techniques, benefits and characteristics of electrochemical-based analytical test strips according to embodiments of the present invention and described herein.

While preferred embodiments of the present invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in practicing the invention. It is intended that the following claims define the scope of the invention and that devices and methods within the scope of these claims and their equivalents be covered thereby.

## Claims

1. An electrochemical-based analytical test strip for the determination of an analyte in a bodily fluid sample, the electrochemical-based analytical test strip comprising:
an electrically-insulating substrate;
at least one working electrode disposed on the electrically-insulating substrate;
a graded enzymatic reagent layer disposed on the at least one working electrode, the graded enzymatic reagent layer including at least:
an upper reaction grade containing at least an enzyme; and
a lower spacer grade devoid of the enzyme, the lower spacer grade disposed between the upper reaction grade and the at least one working electrode such that the upper reaction grade is spaced equidistant from the at least one working layer by the lower spacer grade by a predetermined distance during use of the
electrochemical-based analytical test strip, and
wherein the upper reaction grade is configured and constituted such that an enzymatic reaction between the enzyme and an analyte in the bodily fluid sample applied to the electrochemical-based analytical test strip is localized within the upper reaction grade; and
wherein the lower spacer grade has predetermined mass transport characteristics for a component of the enzymatic reaction that cause mass transport of the component through the lower spacer grade to the working electrode to be slower than mass transport of the analyte through the bodily fluid sample to the upper reaction grade during use of the electrochemical-based analytical test strip.

2. A method for determining an analyte in a bodily fluid sample, the method comprising:
applying a bodily fluid sample to an electrochemical-based analytical test strip that includes:
at least one working electrode disposed on an electrically-insulating substrate;
a graded enzymatic reagent layer disposed on the at least one working electrode, the graded enzymatic reagent layer including at least:
an upper reaction grade containing at least an enzyme; and
a lower spacer grade devoid of the enzyme, the lower spacer grade disposed between the upper reaction grade and the at least one working electrode such that the upper reaction grade is spaced equidistant from the at least one working electrode by the lower spacer grade by a predetermined distance during use of the
electrochemical-based analytical test strip,
wherein the upper reaction grade is configured and constituted such that an enzymatic reaction between the enzyme and an analyte in the bodily fluid sample applied to the electrochemical-based analyte test strip is localized within the upper reaction grade, and
wherein the lower spacer grade has predetermined mass transport characteristics for a component of the enzymatic reaction that cause mass transport of the component through the lower spacer grade to the working electrode to be slower than mass transport of the analyte through the bodily fluid sample to the upper reaction grade during use of the electrochemical-based analytical test strip;
measuring an electrochemical response of the electrochemical-based analytical test strip; and
determining the analyte based on the measured electrochemical response.

3. The electrochemical-based analytical test strip of claim 1 or the method of claim 2 wherein the analyte is glucose and the bodily fluid sample is a whole blood sample.

4. The electrochemical-based analytical test strip of claim 1 or the method of claim 2 wherein the predetermined mass transport characteristics of the lower spacer grade includes a diffusion coefficient for a mediator component of the enzymatic reagent layer in the range of 6.5x10⁻⁸ cm²/sec to 2x10⁻⁷ cm²/sec., and
wherein the upper reaction grade has a diffusion coefficient for the mediator component of approximately 2x10⁻⁶cm²/sec.

5. The electrochemical-based analytical test strip of claim 4 or the method of claim 4 wherein the lower spacer grade is configured and constituted to have a thickness in the range of 1 micron to 3 microns upon exposure to a whole blood sample during use of the electrochemical-based analytical test strip.

6. The electrochemical-based analytical test strip of claim 4 or the method of claim 4 wherein the upper reaction grade is configured and constituted to have a thickness in the range of 6 microns to 10 microns upon exposure to a whole blood sample during use of the electrochemical-based analytical test strip.

7. The electrochemical-based analytical test strip of claim 4 or the method of claim 4 wherein the mediator component is ferrocyanide generated from ferricyanide during the electrochemical reaction.

8. The electrochemical-based analytical test strip of claim 1 or the method of claim 2 wherein the upper reaction grade includes an enzymatic reagent composition with at least one additive component and the lower reaction grade includes at least the additive component of the enzymatic reagent composition.

9. The electrochemical-based analytical test strip of claim 1 or the method of claim 2 wherein the upper reaction grade includes an enzymatic reagent composition with at least one additive component and the lower reaction grade includes the additive component of the enzymatic reagent composition and is devoid of the remainder of the enzymatic reagent composition.

10. The electrochemical-based analytical test strip of claim 9 or the method of claim 9 wherein the additive component is a silica compound.

11. The electrochemical-based analytical test strip of claim 9 or the method of claim 9 wherein the additive component is a hydroxylethyl cellulose (HEC) compound.

12. The electrochemical-based analytical test strip of claim 1 or the method of claim 2 wherein the majority of the enzymatic reaction is localized within the upper reaction grade.

13. The electrochemical-based analytical test strip of claim 1 or the method of claim 2 wherein the upper reaction grade is operably insoluble in the bodily fluid sample.

14. The electrochemical-based analytical test strip of claim 1 or the method of claim 2 wherein the upper reaction grade is operably partially soluble in the bodily fluid sample.

15. The electrochemical-based analytical test strip of claim 1 or the method of claim 2 wherein the lower spacer grade is devoid of pores.
